(19) Europäisches Patentamt
European Patent Office
Office européen des brevets

(11) **EP 3 143 359 B1**

(12) **FASCICULE DE BREVET EUROPEEN**

(45) Date de publication et mention de la délivrance du brevet:
**10.03.2021 Bulletin 2021/10**

(21) Numéro de dépôt: **15718554.7**

(22) Date de dépôt: **09.04.2015**

(51) Int Cl.:
*F28F 27/00* $^{(2006.01)}$   *F16H 57/04* $^{(2010.01)}$

(86) Numéro de dépôt international:
**PCT/FR2015/050952**

(87) Numéro de publication internationale:
**WO 2015/173483 (19.11.2015 Gazette 2015/46)**

(54) **PROCEDE DE DETECTION DE PERTE DE PERFORMANCE D'UN ECHANGEUR THERMIQUE DE CIRCUIT DE REFROIDISSEMENT**

VERFAHREN ZUR ERMITTLUNG EINER NACHLASSENDEN WIRKSAMKEIT EINES KÜHLERS

METHOD OF DETECTING A PERFORMANCE DEGRADATION OF A COOLER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.05.2014 FR 1454244**

(43) Date de publication de la demande:
**22.03.2017 Bulletin 2017/12**

(73) Titulaire: **Renault S.A.S.**
**92100 Boulogne (FR)**

(72) Inventeurs:
• **RIESENMEY, Fabrice**
**F-91780 Chalo Saint Mars (FR)**
• **DEMAY, Bruno**
**F-91770 Saint Vrain (FR)**

(56) Documents cités:
**EP-A2- 2 682 835      WO-A2-2011/135081**
**CN-A- 102 829 991      US-A- 4 390 058**
**US-A1- 2005 105 583      US-A1- 2007 265 135**
**US-A1- 2009 063 113**

EP 3 143 359 B1

**Description**

La présente invention se rapporte à la protection thermique des transmissions, en particulier des transmissions automatiques ou automatisées, dont certains organes exigent un contrôle thermique permanent des fluides de pression intervenant dans leurs systèmes de commande.

Plus précisément, cette invention concerne un procédé de détection de perte de performance d'un échangeur thermique de circuit de refroidissement d'organes mécaniques comprenant un premier circuit de fluide fonctionnel traversant un organe mécanique de transmission de puissance entraîné par un moteur et un deuxième circuit de fluide de refroidissement, recevant la puissance calorifique dissipée par le premier fluide au travers de l'échangeur. Un tel procédé selon le préambule de la revendication 1 est connu de FR 292 81 93 ou US 2007/0265135.

L'organe mécanique de transmission peut être un réducteur de transmission, notamment de transmission automatique ou automatisée.

Dans les boîtes de vitesses automatiques dotées de convertisseur de couple et/ou d'un jeu d'embrayages, les changements de rapports sont assurés par un système hydraulique de commande, dont le fluide fonctionnel nécessite un refroidissement efficace. Le glissement au sein des convertisseurs hydro-cinétiques de couple dissipe en effet une très forte énergie calorifique. L'actionnement de récepteurs hydrauliques (embrayages ou freins) à de forts niveaux de pression, nécessite une puissance hydraulique soutenue. Le rendement hydraulique de ces organes n'étant jamais optimal en raison des fuites et des frottements, ils sont toujours le siège de pertes calorifiques plus ou moins importantes. Enfin, le graissage permanent des réducteurs de vitesses, exige également une puissance hydraulique soutenue, avec des puissances calorifiques élevées à dissiper.

Dans le cas particulier des transmissions automatiques à convertisseur de couple, les dégradations touchent de nombreux éléments, dès que le refroidissement du fluide n'est plus assuré : fissuration et décollage des frictions des freins et des embrayages humides, blocage des vannes de séquences de passages par pollution, perturbation du limiteur et du régulateur de débit et de pression.

Dans tous les cas, la température du fluide de pression doit être limitée à un niveau de sécurité préservant les systèmes de tout risque de détérioration par surchauffe.

Le maintien de la température d'huile à un niveau satisfaisant est généralement assuré grâce à l'action d'un échangeur air / huile ou eau / huile. Les principaux risques de détérioration des échangeurs sont identifiés. Dans un échangeur air/ huile, le réseau aérien peut être colmaté par des boues, des insectes, des végétaux, etc. Dans un échangeur eau / huile, le réseau hydraulique peut être colmaté par la création de boues bactéricides, générées lorsque le circuit de refroidissement du moteur n'est pas entretenu périodiquement, ou bien lorsque le fluide de refroidissement n'est pas en accord avec les définitions de son cahier des charges.

Dans les systèmes de détection connus, les informations thermiques, température d'eau du moteur et température d'huile au sein du réducteur, sont exploitées dans des stratégies de commande visant à protéger le réducteur. Par la publication FR 292 81 93, on connaît un procédé de protection thermique permettant de scruter finement le bilan thermique d'un réducteur de vitesses, et d'y associer des limitations de couple en vue de diminuer la dissipation de calories lorsque la sécurité l'impose. Toutefois, l'interprétation des données collectées ne permet pas d'évaluer les performances de l'échangeur, ni de détecter en temps réel ses pertes d'efficacité.

La présente invention vise à analyser en temps réel la performance d'un échangeur thermique de réducteur de vitesses, en vue d'anticiper la destruction de ses composants par surchauffe.

Dans ce but, elle propose que la puissance calorifique dissipée dans l'échangeur par le premier fluide en direction du second, soit comparée à une puissance de référence déterminée en fonction du débit massique du premier et du deuxième fluide au travers de l'échangeur.

De préférence, la puissance dissipée est déterminée à partir d'une cartographie composée d'un réseau de courbes de puissance de dissipation de l'échangeur en fonction des débits massiques du premier et du deuxième fluide.

L'invention permet d'informer le conducteur, ou l'opérateur d'un réseau de maintenance, de la perte de performance du circuit de refroidissement. Un simple remplacement de l'échangeur, permet d'éviter la destruction de la boîte de vitesse, ou de la machine hydraulique considérée.

Le nouveau procédé permet d'évaluer en temps réel les performances de l'échangeur, d'arbitrer et de décider de mesures préventives et sécuritaires, en informant notamment le conducteur ou le réseau de maintenance, des situations à risque.

D'autres caractéristiques et avantages de l'invention ressortiront clairement de la description suivante d'un mode de réalisation non limitatif de celle-ci, en liaison avec les dessins annexés, sur lesquels :

- la figure 1 est un schéma simplifié d'architecture de refroidissement,
- la figure 2 montre le type de cartographie exploitée,
- la figure 3 illustre le fonctionnement d'un échangeur thermique, et
- la figure 4 explique la méthode.

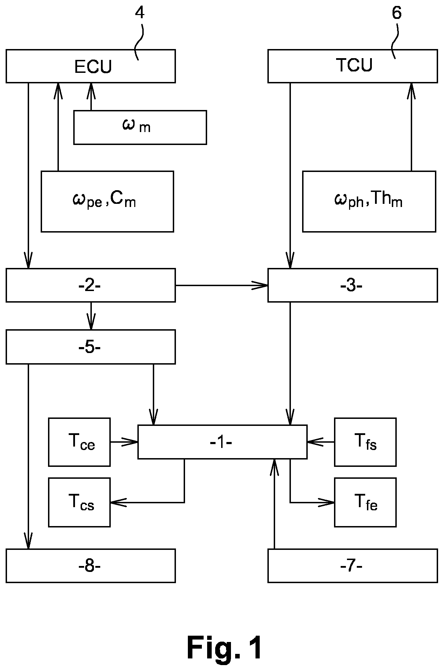

Sur la figure 1, on a regroupé de façon schématique différents organes autour d'un échangeur thermique de transmission 1:

- le moteur d'entraînement du véhicule 2 (qui peut être thermique hydraulique ou électrique),
- un organe de transmission 3, tel qu'un réducteur à commande hydraulique (ou une machine hydraulique),

- une unité de contrôle ECU 4 du moteur 2, qui reçoit les informations de capteurs de régime moteur $\omega_m$, de couple moteur $C_{mot}$ de régime de rotation $\omega_{pe}$ de la pompe à eau
- le circuit de refroidissement du moteur 5 qui relie le moteur 2, et l'échangeur 1 par un ensemble 8 incluant des conduites, une pompe mécanique ou électrique, un échangeur thermique.

Des capteurs de température d'entrée et de sortie d'huile *Tfe, Tfs* et d'eau, *Tce, Tcs* sont prévus sur l'échangeur 1. L'organe de transmission 3 est piloté par son propre calculateur de transmission (TCU) 6, qui est informé notamment de la température moyenne d'huile $T_{hm}$, et du régime de rotation $\omega_{ph}$ de la pompe à huile.

Le circuit hydraulique (non représenté) de l'organe de transmission 3 comprend par exemple :

- une réserve d'huile gravitaire ou à carter sec, une pompe hydraulique à entrainement mécanique ou électrique ou pneumatique ou vapeur, un réseau de distribution hydraulique,
- des consommateurs hydrauliques,
- des actuateurs électro hydrauliques,
- des capteurs de vitesse d'entrée et de sortie du réducteur.

Le réseau de refroidissement d'huile est composé principalement de l'échangeur air / huile ou eau / huile 1, d'un ensemble 7 de pompe mécanique ou électrique, et de conduites, de l'échangeur 1, et des capteurs de température d'entrée Tfe et de sortie *Tfs* d'huile sur l'échangeur 1.

Dans l'échangeur 1, l'eau peut être acheminée par une pompe auxiliaire à entrainement mécanique, électrique, ou pneumatique. Dans une transmission automatique, le flux d'huile est en relation directe avec le mode de fonctionnement de la pompe à huile.

Un microprocesseur gère les entrées de donnée et les calculs de contrôle. Les informations utiles relatives au fonctionnement du moteur, sont le couple disponible, le régime moteur et la température de l'eau. La méthode vise à détecter la perte de performance de l'échangeur thermique 1 du système de refroidissement de l'organe mécanique de transmission de puissance 3. Ce système comprend un premier circuit de fluide fonctionnel tel que de l'huile, qui traverse un l'organe 3 entraîné par le moteur 2 et un deuxième circuit de fluide de refroidissement recevant la puissance calorifique dissipée au travers de l'échangeur par le premier fluide.

La puissance de dissipation calorifique *P* de l'échangeur, se calcule comme le produit de la surface d'échange entre les fluides S, par l'écart de température moyen $\Delta T_m$ entre les fluides et par un coefficient de transmission thermique surfacique moyen K *:*

$$P \;=\; K^* \; S \; ^*\Delta T_m.$$

Dans cette formule, les valeurs de *K* et de $\Delta T_m$ sont des valeurs moyennes, car les températures des deux fluides et le coefficient K varient d'un endroit à l'autre de l'échangeur. En régime permanent on peut supposer que :

- l'échangeur est parfaitement isolé de l'extérieur (pas de pertes),
- on néglige la conduction axiale,
- les coefficients K et Cp sont constants, et
- la température de chaque fluide est homogène dans une section donnée.

Avec ces hypothèses, la puissance dissipée P s'évalue par le produit du débit massique *Qmassique* du deuxième fluide (l'eau) par l'écart de température du premier fluide (l'huile) entre son entrée et sa sortie de l'échangeur 1 par la chaleur spécifique de l'huile *Cpc*. L'équation s'écrit :

$$P = K^*\ S\ ^*\Delta T_m = \ Qmassique\ ^*\ Cpc^*\ (Tce\text{-}Tcs)\ =\ Qmassique\ ^*$$
$$Cpf^*\ (Tfs\text{-}Tfe),$$

où :

Qmassique est le débit massique d'eau (kg/s), calculé en temps réel,
Tce-Tcs est l'écart de température entre l'entrée et la sortie d'eau de l'échangeur,
Tfs-Tfe est l'écart de température entre l'entrée et la sortie d'huile de l'échangeur,
Cpc est la chaleur spécifique du fluide chaud (l'huile) et Cpf, celle du fluide froid (l'eau).

Le débit massique se calcule par intégration à partir du régime de rotation de la pompe à eau, en fonction de la définition technique et des constantes (pertes de charge, dérivation, consommateurs etc.) du circuit hydraulique.

La puissance calorifique P dissipée dans l'échangeur par le premier fluide (huile) en direction du second (eau) est comparée à une puissance de référence $P_r$ déterminée en fonction du débit massique déterminé à partir des données originelles cartographiées, tout en tenant compte des dispersions au sein des différents composants. Le calcul est de préférence réinitialisé à chaque nouveau démarrage du moteur. Il est également souhaitable que la stratégie soit abandonnée, en cas de dégradation avérée de la fonction de refroidissement.

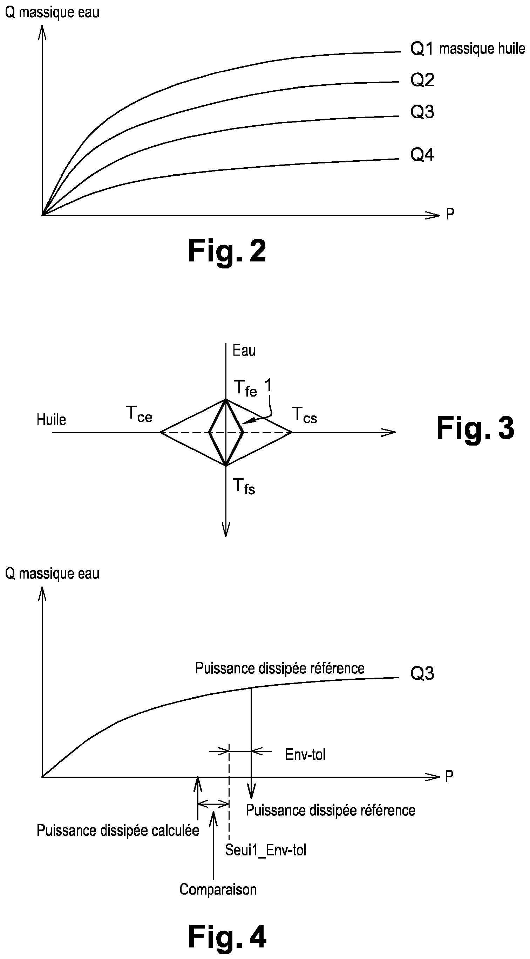

La cartographie de référence, illustrée par la figure 2 regroupe un ensemble de courbes de puissance dissipée dans l'échangeur en fonction du débit massique d'eau, selon le débit massiques d'huile Q1, Q2, Q3, Q4, etc. le traversant. Cette cartographie permet de déterminer La puissance dissipée de référence $P_r$, en fonction des débits massiques du premier fluide (huile) et du deuxième fluide (eau).

La quantité massique des fluides est en rapport direct avec le débit volumétrique de la pompe à eau et de la pompe à huile. Comme indiqué plus haut, la puissance dissipée P se calcule en temps réel par la relation : $P = Q$ massique * Cpc* (Tce - Tcs). Ainsi, en comparant cette valeur avec les valeurs de référence indiquées de la cartographie on sait détecter une baisse de performance de l'échangeur. Toute baisse significative de performance donne lieu à l'envoi d'un message d'alerte vers le conducteur. En mémorisant l'alerte dans le calculateur, le réseau de maintenance du véhicule est capable de retrouver le problème détecté pour d'intervenir de manière efficace. Si une dérive thermique est identifiée, on informe le conducteur (affichage au tableau de bord ou sonore) en niveau d'alerte de premier niveau, et on mémorise le contexte de détection.

La figure 4 met en évidence un autre aspect de l'invention, consistant à définir une enveloppe de tolérance Env-tol, autour de la puissance dissipée de référence. Cette enveloppe est ajustée de manière à englober les dispersions en rapport avec la chaîne des composants du système de refroidissement. La puissance dissipée de référence Pr peut ainsi être corrigée à la baisse par l'enveloppe de tolérance Env-tol, qui est ajustée de manière à englober les dispersions des composants. Dans ce cas, si la puissance dissipée calculée est inférieure au seuil Seuil1_Env-tol, en fonctionnement normal (mode non dégradé), la défaillance de l'échangeur est établie, et le conducteur en est informé.

Une étape préliminaire, ou première étape, de la méthode consiste à documenter lors de prototypages, une cartographie représentative de la puissance de dissipation de l'échangeur. Le travail est opéré sur la base de mesures de température d'entrée et de sortie d'eau, et d'huile, et de calculs de débits d'huile et d'eau, ainsi que de quantités massiques d'eau et d'huile. Ces mesures et ces calculs sont opérés sur différents points de fonctionnement du moteur, afin d'établir une cartographie de référence.

Une deuxième étape consiste à prendre en compte les variables de mesure, et les constantes, en rapport avec le calcul de dissipation thermique, pour calculer la puissance dissipée réelle P.

Une troisième étape consiste à comparer les données calculées et les données cartographiées représentatives d'un environnement de référence sur un point de fonctionnement moteur identifié. La comparaison et l'arbitrage entre ces données, conduit à une décision de défaillance de l'échangeur ou non.

Une quatrième étape consiste à informer le conducteur de la perte de performance de l'échangeur par une alerte visuelle et/ou sonore, et à mémoriser dans le calculateur, les circonstances de l'incident.

La qualité des résultats dépend de celle des informations transmises et du débit du fluide réfrigérant. Afin d'éviter des erreurs de diagnostic, les organes du circuit de refroidissement situés en amont de l'échangeur, doivent donc toujours être contrôlés.

En conclusion, la méthode proposée permet de surveiller les performances d'un échangeur thermique de circuit de refroidissement, et de détecter les colmatages ou les obstructions dégradant progressivement la qualité de l'échange calorifique. Cette invention trouve une application privilégiée sur les réducteurs de vitesses hydrauliques à commande automatisée. Dans le domaine de l'automobile, elle est applicable au diagnostic de puissance de dissipation calorifique des échangeurs de climatisation ou de chauffage. En dehors de celle-ci, d'autres applications sont possibles, par exemple dans le domaine du chauffage domestique ou industriel, pour diagnostiquer des pertes progressives de rendement.

## Revendications

1. Procédé de détection de perte de performance d'un échangeur thermique (1) de circuit de refroidissement d'organes mécaniques comprenant un premier circuit de fluide fonctionnel traversant un organe mécanique de transmission de puissance (3) entraîné par un moteur (2) et un deuxième circuit de fluide de refroidissement recevant la puissance calorifique dissipée au travers de l'échangeur (1) par le premier fluide, **caractérisé en ce que** la puissance calorifique *(P)* dissipée dans l'échangeur par le premier fluide en direction du second est comparée à une puissance de référence *(Pr)* déterminée en fonction du débit massique du premier et du deuxième fluide au travers de l'échangeur.

2. Procédé de détection de perte de performance selon la revendication 1, **caractérisé en ce que** la puissance dissipée de référence (Pr) est déterminée à partir d'une cartographie composée d'un réseau de courbes de puissance de dissipation de l'échangeur (1) en fonction des débits massiques du premier et de deuxième fluide le traversant.

3. Procédé de détection de perte de performance selon la revendication 1 ou 2, **caractérisé en ce que** la puissance dissipée de référence *(Pr)* est corrigée à la baisse par une enveloppe de tolérance *(Env-tol)* ajustée de manière à englober les dispersions des composants du circuit de refroidissement.

4. Procédé de détection de perte de performance selon la revendication 1, 2 ou 3, **caractérisé en ce que** la puissance dissipée *(P)* est calculée comme le produit de la surface d'échange entre les fluides *(S)* par l'écart de température moyen *($\Delta T_m$)* entre les fluides et par un coefficient de transmission thermique surfacique moyen (K).

5. Procédé de détection de perte de performance selon l'une des revendications précédentes, **caractérisé en ce que** la puissance dissipée *(P)* est évaluée en temps réel comme le produit du débit massique *(Qmassique)* du deuxième fluide par l'écart de température *(Tfe-Tfs)* du premier fluide entre son entrée et sa sortie de l'échangeur (1), par sa chaleur spécifique *(Cpc)*.

6. Procédé de détection de perte de performance selon l'une des revendications précédentes, **caractérisé en ce qu'**il comporte un étape préliminaire consistant à documenter, une cartographie représentative de la puissance de dissipation de l'échangeur en fonction de mesures de températures d'entrée et de sortie des fluides, et de calculs de leurs débits.

7. Procédé de détection de perte de performance selon l'une des revendications précédentes, **caractérisé en ce que** le conducteur est informé par un message d'alerte visuel et/ou sonore, de la perte de performance de l'échangeur thermique (1).

8. Procédé de détection de perte de performance selon l'une des revendications précédentes, **caractérisé en ce que** la perte de performance est mémorisée avec les circonstances de l'incident.

9. Procédé de détection de perte de performance selon l'une des revendications précédentes, **caractérisé en ce que** la détection est abandonnée lors d'une dégradation avérée de la fonction de refroidissement.

10. Procédé de détection de perte de performance selon l'une des revendications précédentes, **caractérisé en ce que** la boucle de calcul est réinitialisée à chaque nouveau démarrage du moteur.

**Patentansprüche**

1. Verfahren zur Erkennung einer abnehmenden Wirksamkeit eines Wärmetauschers (1) eines Kühlsystems mechanischer Organe, welches einen ersten Kreislauf eines funktionellen Fluids, das ein von einem Motor (2) angetriebenes mechanisches Kraftübertragungsorgan (3) durchströmt, und einen zweiten Kreislauf eines Kühlfluids, das die von dem ersten Fluid über den Wärmetauscher (1) abgegebene Wärmeleistung aufnimmt, umfasst, **dadurch gekennzeichnet, dass** die Wärmeleistung (P), die im Wärmetauscher von dem ersten Fluid in Richtung des zweiten abgegeben wird, mit einer Referenzleistung *(Pr)* verglichen wird, die in Abhängigkeit vom Massendurchfluss des ersten und des zweiten Fluids durch den Wärmetauscher bestimmt wird.

2. Verfahren zur Erkennung einer abnehmenden Wirksamkeit nach Anspruch 1, **dadurch gekennzeichnet, dass** die Referenz-Leistungsabgabe (Pr) aus einem Kennfeld bestimmt wird, das aus einem Netz von Kurven der Abgabeleistung des Wärmetauschers (1) in Abhängigkeit von den Massendurchflüssen des ersten und des zweiten Fluids, die ihn durchqueren, besteht.

3. Verfahren zur Erkennung einer abnehmenden Wirksamkeit nach Anspruch 1 oder 2, **dadurch gekennzeichnet,**

**dass** die Referenz-Leistungsabgabe (*Pr*) durch eine Toleranzhüllkurve (*Env-tol*) nach unten korrigiert wird, die so angepasst ist, dass sie die Streuungen der Komponenten des Kühlsystems umfasst.

4. Verfahren zur Erkennung einer abnehmenden Wirksamkeit nach Anspruch 1, 2 oder 3, **dadurch gekennzeichnet, dass** die abgegebene Leistung (P) als das Produkt der Austauschfläche zwischen den Fluiden (S) mit dem mittleren Temperaturunterschied ($\Delta T_m$) zwischen den Fluiden und mit einem mittleren flächenbezogenen Wärmeübergangskoeffizienten (K) berechnet wird.

5. Verfahren zur Erkennung einer abnehmenden Wirksamkeit nach einem der vorhergehenden Ansprüche, **dadurch gekennzeichnet, dass** die abgegebene Leistung (P) in Echtzeit als das Produkt des Massendurchflusses (*Qmassique*) des zweiten Fluids mit dem Unterschied (*Tfe-Tfs*) zwischen den Temperaturen des ersten Fluids bei seinem Eintritt in den Wärmetauscher (1) und seinem Austritt aus ihm und mit seiner spezifischen Wärme (Cpc) ermittelt wird.

6. Verfahren zur Erkennung einer abnehmenden Wirksamkeit nach einem der vorhergehenden Ansprüche, **dadurch gekennzeichnet, dass** es einen vorausgehenden Schritt umfasst, der darin besteht, ein Kennfeld zu dokumentieren, das für die Abgabeleistung des Wärmetauschers in Abhängigkeit von Messungen von Eintritts- und Austrittstemperaturen der Fluide und von Berechnungen ihrer Durchflussmengen repräsentativ ist.

7. Verfahren zur Erkennung einer abnehmenden Wirksamkeit nach einem der vorhergehenden Ansprüche, **dadurch gekennzeichnet, dass** der Fahrer durch eine visuelle und/oder akustische Alarmmeldung über die abnehmende Wirksamkeit des Wärmetauschers (1) informiert wird.

8. Verfahren zur Erkennung einer abnehmenden Wirksamkeit nach einem der vorhergehenden Ansprüche, **dadurch gekennzeichnet, dass** die abnehmende Wirksamkeit zusammen mit den Umständen des Störfalls gespeichert wird.

9. Verfahren zur Erkennung einer abnehmenden Wirksamkeit nach einem der vorhergehenden Ansprüche, **dadurch gekennzeichnet, dass** die Erkennung bei einer erwiesenen Beeinträchtigung der Kühlfunktion abgebrochen wird.

10. Verfahren zur Erkennung einer abnehmenden Wirksamkeit nach einem der vorhergehenden Ansprüche, **dadurch gekennzeichnet, dass** die Berechnungsschleife bei jedem erneuten Starten des Motors neu initialisiert wird.

**Claims**

1. Method for detecting a loss in performance of a heat exchanger (1) of a cooling circuit for mechanical members, comprising a first functional-fluid circuit passing through a mechanical power transmission member (3) driven by a motor (2), and a second cooling-fluid circuit receiving the heat power dissipated through the exchanger (1) by the first fluid, **characterized in that** the heat power (P) dissipated in the exchanger by the first fluid in the direction of the second is compared with a reference power ($P_r$) determined as a function of the mass flow rate of the first and of the second fluid through the exchanger.

2. Method for detecting a loss in performance according to Claim 1, **characterized in that** the reference power dissi-pated ($P_r$) is determined from a map composed of an array of curves of dissipation power of the exchanger (1) as a function of the mass flow rates of the first and second fluid passing through it.

3. Method for detecting a loss in performance according to Claim 1 or 2, **characterized in that** the reference power dissipated (*Pr*) is corrected downwards by a tolerance envelope (*Env-tol*) adjusted so as to encompass the dispersions of the components of the cooling circuit.

4. Method for detecting a loss in performance according to Claim 1, 2 or 3, **characterized in that** the power dissipated (P) is calculated as the product of the exchanger area between the fluids (S) times the mean temperature difference ($\Delta T_m$) between the fluids and times a mean surface heat transmission coefficient (K).

5. Method for detecting a loss in performance according to one of the preceding claims, **characterized in that** the power dissipated (P) is evaluated in real time as the product of the mass flow rate (*Qmass*) of the second fluid times the temperature difference (*Tfe-Tfs*) of the first fluid between its entry into and its exit from the exchanger (1) times its specific heat (*Cpc*).

6. Method for detecting a loss in performance according to one of the preceding claims, **characterized in that** it comprises a preliminary step consisting in documenting a map representative of the dissipation power of the exchanger as a function of measurements of inlet and outlet temperatures of the fluids, and of calculations of their flow rates.

7. Method for detecting a loss in performance according one of the preceding claims, **characterized in that** the driver is informed by a visual and/or audible alert message of the loss in performance of the heat exchanger (1) .

8. Method for detecting a loss in performance according one of the preceding claims, **characterized in that** the loss in performance is stored with the circumstances of the incident.

9. Method for detecting a loss in performance according one of the preceding claims, **characterized in that** the detection is abandoned during a recognized degradation of the cooling function.

10. Method for detecting a loss in performance according one of the preceding claims, **characterized in that** the calculation loop is reinitialized on each new start of the motor.

**Fig. 1**

Q massique eau

Q1 massique huile

Q2

Q3

Q4

P

## Fig. 2

Eau

$T_{fe}$  1

Huile   $T_{ce}$     $T_{cs}$

$T_{fs}$

## Fig. 3

Q massique eau

Puissance dissipée référence   Q3

Env-tol

P

Puissance dissipée référence

Puissance dissipée calculée

Seui1_Env-tol

Comparaison

## Fig. 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2928193

- US 20070265135 A